# EUROPEAN PATENT SPECIFICATION

(11) **EP 2 312 169 B1**
(45) Date of publication and mention of the grant of the patent: **17.04.2013**
(21) Application number: 10186354.6
(22) Date of filing: 04.10.2010
(51) Int. Cl.: F15B 13/04

(54) **Valve for controlling oil flow to a single acting cylinder**
Ventil zur Steuerung des Ölflusses zu einem einfach wirkenden Zylinder
Soupape permettant de contrôler le débit d'huile dans un cylindre à simple effet

(30) Priority: 15.10.2009 EP 09173145
(43) Date of publication of application: 20.04.2011
(73) Proprietor: Hyva International B.V., 2400 AH Alphen aan de Rijn (NL)
(72) Inventor: Biemond, Jacob, 2411LH Bodegraven (NL)
(74) Representative: Uittenbogaart, Gustaaf Adolf

(56) References cited:
- EP-A1- 1 197 692
- WO-A1-2009/010331
- DE-A1- 10 121 924
- DE-C- 734 458
- GB-A- 831 611

## Description

The invention concerns a valve in accordance with the preamble of claim 1. Such valves are known and are used for controlling the movement of a hydraulic cylinder that lifts one side of a tipping body so that the tipping body unloads. In the known valves, the first channel is a longitudinal channel in the valve housing which makes the valve body complicated and expensive, which is a disadvantage. Similar valves are also disclosed in DE 734 458 and in DE 101 21 924.

In order to overcome this disadvantage the valve is according to claim 1. In this way, the valve body has no major longitudinal channels and is easy to produce.

In accordance with an embodiment, the valve is according to claim 2. The first flange surface is used to mount the valve against a flange on the single sided cylinder with an oil tight flange connection. The bolts for mounting the valve on the single sided cylinder are adjacent to the opening in the flange so that no leakage occurs. Mounting the valve directly against the single sided cylinder avoids the use of pipes or tubes and thereby reduces the risk of accidents that might occur as a result of rupture of the pipes or tubes.

In accordance with an embodiment, the valve is according to claim 3. In this way, the valve can be stably mounted directly on the oil tank.

In accordance with an embodiment, the valve is according to claim 4. This prevents overload of the hydraulic cylinder independent of the setting of the drive and/or the availability of pressure at the pump connection.

In accordance with an embodiment, the valve is according to claim 5. In this way the movement of the hydraulic cylinder always stops in situations where the signals for the drive are not available.

In accordance with an embodiment, the valve is according to claim 6. In this way, simple pneumatic valves coupled to a pneumatic system that is customary on most commercial vehicles control the valve.

Hereafter the invention is explained using a description of one or more embodiments with the aid of a drawing in which
Figure 1 shows a partial side view of a cylinder assembly mounted in a frame for lifting a tipping body,
Figure 2 shows a partial front view of the cylinder of figure 1,
Figure 3 shows a perspective view of the cylinder assembly of figures 1 and 2,
Figure 4 shows a schematic view of the tip valve for controlling the cylinder assembly of figures of 1 to 3
Figure 5 shows a top view of a tip valve for controlling the cylinder assembly of figures 1 to 3,
Figure 6 shows a perspective view of the tip valve of figure 5,
Figure 7 shows a cross section of the tip valve of figures 5 and 6 in a tip position,
Figure 8 shows a cross section of the tip valve of figures 5 and 6 in a neutral position, and
Figure 9 shows a cross section of the tip valve of figures 5 and 6 in a lower position.

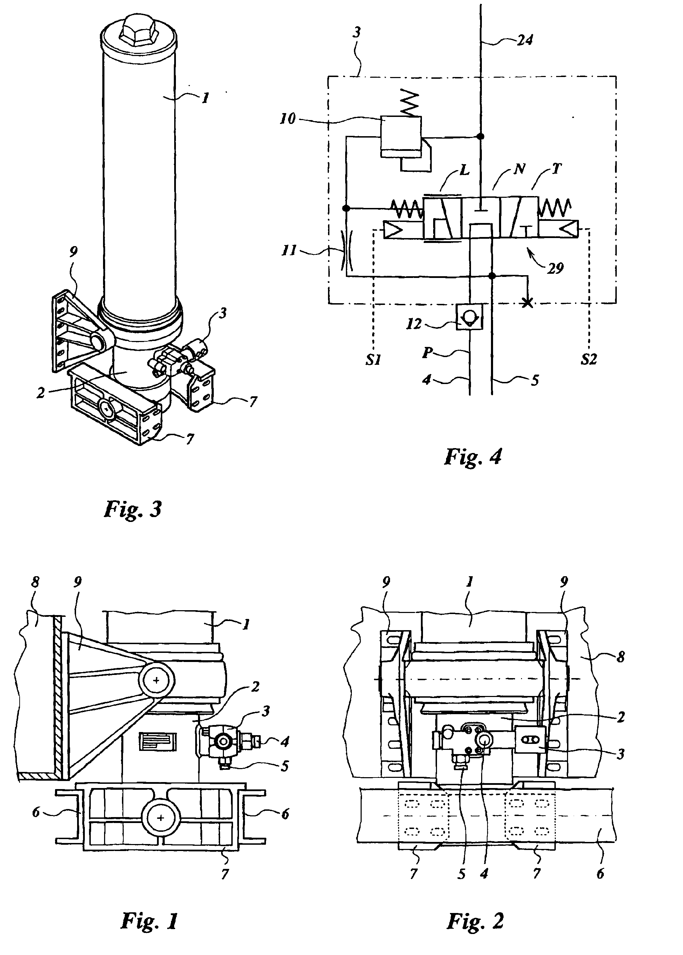

Figures 1, 2 and 3 show a cylinder assembly mounted in a commercial vehicle such as a tipper and used for lifting a tipping body 8. Such a cylinder assembly excerts a force in an upwards direction against a gravitational force on the tipping body 8 and pumping oil through a cylinder connection 24 (see figures 4-9) into a cylinder housing 1 causes a cylinder plunger 2 to move away from the cylinder housing 1. Letting oil out of the cylinder housing 1 through the cylinder connection 24 makes the gravitational force move the cylinder plunger 2 and the cylinder housing 1 towards each other. Support brackets 7 support the cylinder plunger 2 and the brackets 7 are mounted between frame beams 6 that are mounted between the chassis beams of a vehicle. The tipping body 8 has lifting brackets 9. The chassis beams hingeably support the tipping body 8 and moving the lifting brackets 9 upwards causes the tipping body 8 to hinge relative to the chassis beams so that the tipping body 8 empties.

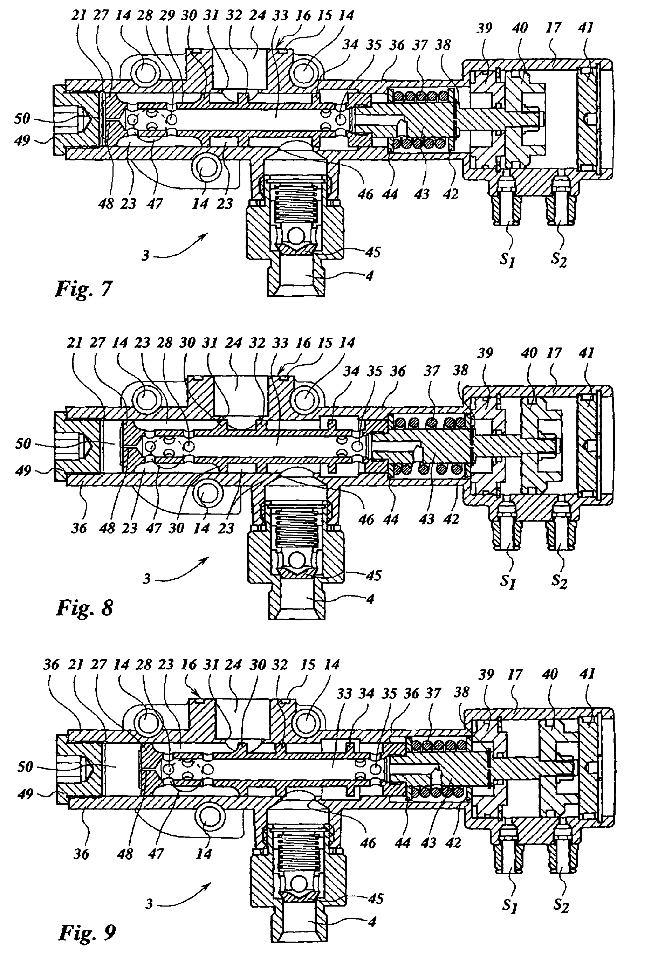

A tip valve 3 is mounted with a flange surface 16 with the cylinder connection 24 on the cylinder plunger 2 and has a tank connection 5 and a pump connection 4. Figure 4 shows a schematic view of the tip valve 3 and shows the three settings that a valve body 29 (also see figures 7 to 9) of the tip valve 3 can have. In figure 4 the tip valve 3 is shown in a neutral position N, springs keep the valve body 29 in this position. A first signal pressure S1 moves the valve body 29 to a lower position L and a second signal pressure S2 moves the valve body 29 to a tip position T. An operator applies either the first signal pressure S1 or the second signal pressure S2 using one or more valves (not shown).

In the neutral position N, the pump connection 4 with an oil pressure P connects via a check valve 12 and the valve body 29 with the tank connection 5. In addition, the valve body 29 closes the cylinder connection 24, so that the cylinder housing 1 and the cylinder plunger 2 cannot move relative one another.

Applying the second signal pressure S2 moves the valve body 29 to the tip position T so that the pump connection 4 and the cylinder connection 24 are connected en the tank connection 5 is closed. The oil pressure P now causes the cylinder housing 1 to lift the tipping body 8, this lifting can continue until the cylinder assembly has its maximum stroke or until the operator switches the second signal pressure S2 off. When the cylinder assembly reaches its maximum stroke while the tip valve 3 remains in the tip position T, the pressure in the cylinder assembly can get higher than is allowable due to continued oil flow from the pump; this too high pressure can also happen when the load in the tipper body 8 is too high. In order to prevent damage in those situations the tip valve 3 has a relief valve 10 connected to the cylinder connection 24 and when the oil pressure exceeds a set value, oil flows through the relief valve 10 via a restriction 11 to the tank connection 5. In that situation, the oil pressure is high in the canal before the restriction 11 and this pressure acts on the valve body 29 and moves the valve body 29 to the neutral position N or even the lower position L. This limits the pressure in the cylinder connection 24.

Applying the first signal pressure S1 to the tip valve 3 moves the valve body 29 to the lower position L. In the lower position L the pump connection 4 and the cylinder connection 24 are connected to the tank connection 5 so that the oil can flow freely to the oil tank and the gravity forces lower the tipper body 8 on the chassis beams.

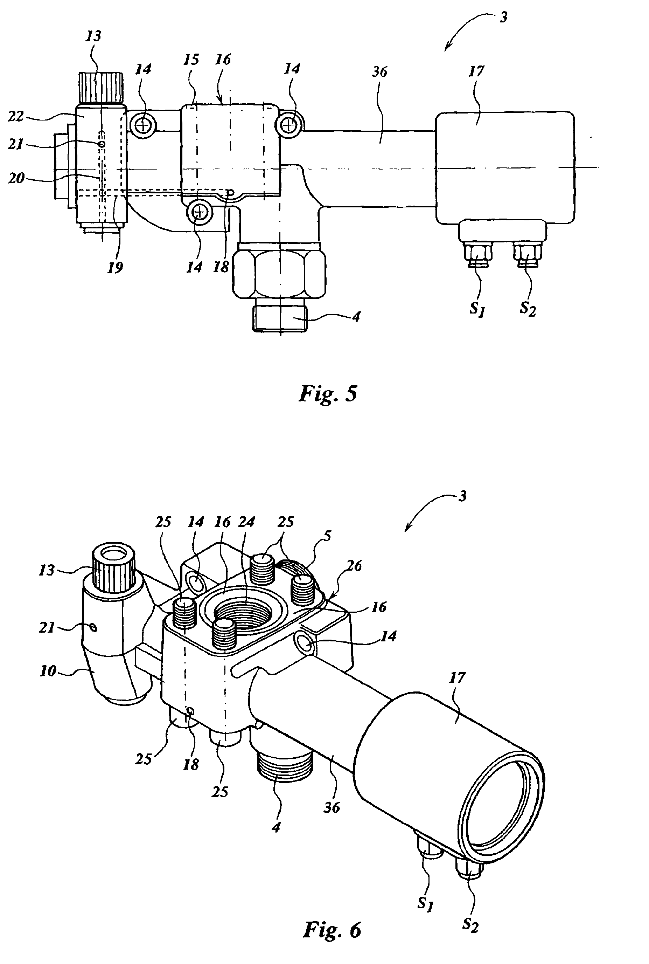

Figures 5 and 6 show outside views of the tip valve 3. For mounting the tip valve 3 against the cylinder plunger 2 the flange surface 16 is designed for high hydraulic pressure and has four bolt holes suitable for four bolts 25 immediately surrounding the cylinder connection 24 and has a chamber 15 for an 0-ring that provides a sealing between the flange surface 16 and the cylinder plunger 2. The four bolts will couple the tip valve 3 to the cylinder plunger 2 in a firm and stable way so that the high-pressure connection is maintained also during transport of the vehicle over rough roads and prevents risk of rupture of a tube or a pipe in the connection between the tip valve 3 and the cylinder assembly. This prevents unexpected lowering of the tipping body 8 which improves safety.

In another embodiment than that shown in figures 1-3 the tip valve 3 can be connected with a pipe to the cylinder plunger 2; for this the cylinder connection 24 has an inside thread. For mounting the tip valve 3 against an oil tank, a flange surface 26 has three bolt holes 14 suitable for bolts, in the embodiment shown in figure 6 the tank connection 5 has a nipple for connecting the tank using a pipe or a tube. In the shown embodiment, the pump connection 4 is with a nipple and the connection will be with a combination of pipe and tube. By mounting the tube valve 3 on the cylinder assembly as shown in figures 1-3 there is only one pressure line, the connection to the pump, connected to the cylinder assembly. This reduces the risk of damage due to rupture of a pressure line.

The tip valve 3 has a valve housing 36 with at one end a cylinder wall 17 in which a plunger 40 (see figures 7-9) can move for positioning the valve body 29 in three positions. Pneumatic pressure supplied via nipples as respectively first signal pressure S1 and second signal pressure S2 activates the plunger 40. The relief valve 10 is mounted at the other end of the valve housing 36 in a cartridge housing 22; the relief valve 10 has a control knob 13 for setting the maximum pressure in the cylinder connection 24. For connecting the cylinder connection 24 with the cartridge housing there is a longitudinal bore 19, a transverse bore 20 (both indicated with interrupted lines) and a first plugged bore 18 and a second plugged bore 21. The longitudinal bore 19 is located such that it does not intersect the holes perpendicular to the flange surface 16 and the flange surface 26.

Figures 7-9 show the tip valve 3 in cross section. The valve housing 36 has a cylindrical valve chamber 23, a stop 49 closes the valve chamber 23 at one side, and at the other side the valve chamber 23 ends in a cylinder formed by the wall 17. The valve chamber 23 has a first wall opening 47 that connects the valve chamber 23 with the tank connection 5, a second wall opening 31 that connects the valve chamber 23 with the cylinder connection 24 and a third wall opening 46 that connects the valve chamber 23 with the pump connection 4 via a check valve 45. The second wall opening 31 is between the first wall opening 47 and the third wall 46 opening.

The valve body 29 has a first ridge 34, a second ridge 32, a third ridge 30 and a fourth ridge 27, these ridges fit accurately in the inner surface of the valve chamber 23 so that the position of the valve body 29 controls the flow of oil between the wall openings 47, 31 and 46. The inner surface of the valve chamber 23 has a larger diameter near the position of the first ridge 34, so that oil can flow around the first ridge 34 when the valve body 29 is in the neutral position N and the lowering position L, and fits accurately in the inner surface of the valve chamber 23 and closes the oil flow around the first ridge 34 when the valve body 29 is in the tipping position T. The valve body 29 has a cavity 33 and first holes 28 that connect the cavity 33 with the valve chamber 23 at one side of the first ridge 34 and second holes 35 that connect the cavity 33 with the valve chamber at the other side of the third ridge 30. In this way the valve chamber 23 between the first ridge 34 and the third ridge 30 does not connect to the cavity 33 when these ridges narrowly fit in the valve housing 36.

The plunger shaft 43 connects the valve body 29 at one end to a plunger 40 for moving and/or positioning the valve body 29 with the aid of air pressure. At the other end, the cavity 33 ends in a closed surface and this surface with the fourth ridge 27 forms with the valve housing 36 and the stop 49 an end chamber 50. In the valve body 29 a small canal 48 through the closed surface makes a small oil flow possible between the end chamber 50 and the cavity 33 and the small canal 48 acts as the restriction 11 (see figure 4). The second plugged bore 21 connects the end chamber 50 to the cartridge housing 22.

The plunger 40 can slide in the cylinder wall 17. A separation cover 39 and an end cover 41 form respectively with the plunger 40 and the cylinder wall 17 two separate air chambers that are connected to the first signal pressure S1 and the second signal pressure S2. A spring 37 is mounted around the plunger shaft 43 between a first ring 42 and a second ring 44. A retaining ring 38 limits the axial movement of the first ring 42 over the plunger shaft 43 in the direction towards the plunger 40 and the valve body 29 limits the movement of the second ring 44 over the plunger shaft 43 in the opposite direction. The separation cover 39 and the valve housing 36 respectively push against the first ring 42 and the second ring 44 and so push the valve body 29 and the plunger 40 to the neutral position N.

In the neutral position N (see figure 8) the oil flow from the pump connection 4 flows through the third wall opening 46, around the first ridge 34, through the second holes 35, the cavity 33, the first holes 28, through the first wall opening to the tank connection 5. The second ridge 32 and the third ridge 30 close the oil flow through the second wall opening 31 to the cylinder connection 24. In the tip position T (see figure 7) the second signal pressure S2 is high. The first ridge 34 and the third ridge 30 direct the oil flow from the pressure connection 4 to the cylinder connection 24 and the first ridge blocks the flow through the cavity 33 to the tank connection 5. In the lower position L (see figure 9) the pressure connection 4 is in open connection with the tank connection 5 via the second holes 35, the cavity 33 and the first holes 28, the cylinder connection 24 connects around the third ridge 30 with the tank connection 5.

The bolt holes 14 and/or the openings for the heads of the bolts for coupling the flange surfaces 16, 26 of the tip valve 3 to other flange connections are perpendicular to the longitudinal direction and at both sides of the valve housing 36. The holes and/or openings perpendicular intersect the valve chamber 23 at such a distance that there is only a single wall thickness between the valve chamber 23 and the holes and/or openings. In this way it is possible that the flange connections can withstand high fluid pressure without leakage.

## Claims

1. Valve for controlling oil flow to a single sided cylinder having a single hydraulic connection comprising
a valve housing (36) with a cylindrical wall enclosing a valve chamber (23), the cylindrical wall has no more hydraulic connections than a pump connection (4,46) to be connected to a pump, a cylinder connection (24,31) to be connected to the single hydraulic connection, and a tank connection (5,47) to be connected to a storage tank, a valve body (29) with ridges (30,32,34) that seal against the cylindrical wall of the valve chamber,
a first channel (46,35,33,28,47) for connecting the tank connection and the pump connection and/or the cylinder connection, and
a drive (17,40,43) for axially positioning the valve body in the valve chamber in a neutral position (N) wherein the valve body closes the cylinder connection and the first channel connects the pump connection and the tank connection, in a tip position (T) wherein the cylinder connection and the pump connection are connected and in a lower position (L) wherein the first channel connects the pump connection with both the cylinder connection and the tank connection **characterized in that** the first channel is formed by a cavity (33) in the valve body (29) and preferably by openings (28,35) at both ends in the sides of the valve body.

2. Valve in accordance with claim 1 in which the valve housing (36) has a first flange surface (16) around the cylinder connection (24) and parallel to the centre line of the valve chamber (23) with mounting holes perpendicular to the first flange surface and the centre line of the valve chamber adjacent to or intersecting the cylindrical wall.

3. Valve in accordance with claim 1 or 2 in which the valve housing (36) has a second flange surface (26) around the tank connection (5) and parallel to the centre line of the valve chamber (23) with mounting holes (14) perpendicular to the second flange surface and the centre line of the valve housing adjacent or intersecting the cylindrical wall.

4. Valve in accordance with one of the previous claims wherein at one end the valve body (29) has a ridge (27) that forms with the valve housing (36) an end chamber (50) and a restriction (48) connects the end chamber and the cavity (33) and wherein a second channel (18,19,20,21) connects the cylinder connection (24) with the end chamber via a pressure relief valve (10).

5. Valve in accordance with one of the previous claims in which the drive (17,40,43) comprises a spring (37) for pushing the valve body (29) to the neutral position (N).

6. Valve in accordance with one of the previous claims in which the drive (17,40,43) comprises a pneumatically driven plunger (40).

## Patentansprüche

1. Ventil zur Steuerung des Ölflusses zu einem einfach wirkenden Zylinder welches eine einzige hydraulische Verbindung hat, aufweisend
ein Ventilgehäuse (36) mit einer zylindrischen Wand die eine Ventilkammer (23) umschließt, wobei die zylindrische Wand keine weiteren hydraulischen Verbindungen als eine Pumpenverbindung (4, 46) hat, welche mit einer Pumpe verbunden wird, wobei eine Zylinderverbindung (24, 31) mit der einzigen hydraulischen Verbindung verbunden wird, und eine Tankverbindung (5, 47) mit einem Speichertank verbunden wird, ein Ventilkörper (29) mit Vorsprüngen (30, 32, 34) die gegen die zylindrische Wand der Ventilkammer abdichten,
ein erster Kanal (46, 35, 33, 28, 47) zum Verbinden der Tankverbindung mit der Pumpenverbindung und / oder mit der Zylinderverbindung, und
einen Antrieb (17, 40, 43) für eine axiale Positionierung des Ventilkörpers in der Ventilkammer in einer neutralen Position (N), in der der Ventilkörper die Zylinderverbindung schließt und der erste Kanal die Pumpenverbindung mit der Tankverbindung verbindet, in einer gedrückten Position (T), in der die Zylinderverbindung und die Pumpenverbindung verbunden sind, und in einer unteren Position (L), in der der erste Kanal die Pumpenverbindung mit sowohl der Zylinderverbindung als auch mit der Tankverbindung verbindet,
**dadurch gekennzeichnet, dass** der erste Kanal durch einen Hohlraum (33) in dem Ventilkörper (29) gebildet wird und bevorzugt durch Öffnungen (28, 35) an beiden Enden in den Seiten des Ventilkörpers.

2. Ventil gemäß Anspruch 1, wobei das Ventilgehäuse (36) eine erste Flanschfläche (16) um die Zylinderverbindung (24) herum aufweist und die Flanschfläche (16) parallel zur Mittellinie der Ventilkammer (23) verläuft, mit Befestigungsbohrungen senkrecht zu der ersten Flanschfläche und wobei die Mittellinie der Ventilkammer benachbart zur zylindrischen Wand verläuft oder diese schneidet.

3. Ventil gemäß einem der Ansprüche 1 oder 2, wobei das Ventilgehäuse (36) eine zweite Flanschfläche (26) um die Tankverbindung (5) herum aufweist und die Flanschfläche (26) parallel zu der Mittellinie von der Ventilkammer (23) verläuft, mit Befestigungsbohrungen (14) senkrecht zu der zweiten Flanschfläche und wobei die Mittellinie des Ventilgehäuses benachbart zur zylindrischen Wand verläuft oder diese schneidet.

4. Ventil gemäß einem der vorhergehenden Ansprüche, wobei der Ventilkörper (29) an einem Ende einen Vorsprung (27) aufweist, der mit dem Ventilgehäuse (36) ein Endkammer (50) ausbildet und wobei eine Drossel (48) die Endkammer mit dem Hohlraum (33) verbindet und wobei ein zweiter Kanal (18, 19, 20, 21) die Zylinderverbindung (24) mit der Endkammer über ein Druckentlastungsventil (10) verbindet.

5. Ventil gemäß einem der vorhergehenden Ansprüche, wobei der Antrieb (17, 40, 43) eine Feder (37) zum Drücken des Ventilkörpers (29) in die neutrale Position (N) aufweist.

6. Ventil gemäß einem der vorhergehenden Ansprüche, wobei der Antrieb (17, 40, 43) einen druckluftgetriebenen Kolben (40) aufweist.

## Revendications

1. Soupape destinée à contrôler un débit d'huile vers un cylindre à simple effet présentant un seul raccord hydraulique, comprenant :
un logement de soupape (36) avec une paroi cylindrique enfermant une chambre de soupape (23), la paroi cylindrique ne présentant pas plus de raccords hydrauliques qu'un raccord de pompe (4, 46) à raccorder à une pompe, un raccord de cylindre (24, 31) à raccorder au seul raccord hydraulique, et un raccord de réservoir (5, 47) à raccorder à un réservoir de stockage, un corps de soupape (29) avec des crêtes (30, 32, 34) qui assurent une étanchéité contre la paroi cylindrique de la chambre de soupape ;
un premier canal (46, 35, 33, 28, 47) pour raccorder le raccord de réservoir au raccord de pompe et/ou au raccord de cylindre ; et
une commande (17, 40, 43) pour positionner axialement le corps de soupape dans la chambre de soupape dans une position neutre (N) dans laquelle le corps de soupape ferme le raccord de cylindre et le premier canal raccorde le raccord de pompe au raccord de réservoir, dans une position de bout (T) dans laquelle le raccord de cylindre et le raccord de pompe sont raccordes, et dans une position inférieure (L) dans laquelle le premier canal raccorde le raccord de pompe tant au raccord de cylindre qu'au raccord de réservoir ;
**caractérisé en ce que** le premier canal est constitué par une cavité (33) dans le corps de soupape (29) et de préférence par des ouvertures (28, 35) situées au niveau des deux extrémités dans les côtés du corps de soupape.

2. Soupape selon la revendication 1, dans laquelle le logement de soupape (36) présente une première surface de bride (16) autour du raccord de cylindre (24) et parallèle à la ligne centrale de la chambre de soupape (23), les trous de montage étant perpendiculaires à la première surface de bride et la ligne centrale de la chambre de soupape étant adjacente à la paroi cylindrique ou coupant celle-ci.

3. Soupape selon la revendication 1 ou 2, dans laquelle le logement de soupape (36) présente une seconde surface de bride (26) autour du raccord de réservoir (5) et parallèle à la ligne centrale de la chambre de soupape (23), les trous de montage (14) étant perpendiculaires à la seconde surface de bride et la ligne centrale du logement de soupape étant adjacente à la paroi cylindrique ou coupant celle-ci.

4. Soupape selon l'une quelconque des revendications précédentes, dans laquelle, au niveau d'une extrémité, le corps de soupape (29) présente une crête (27) qui forme avec le logement de soupape (36) une chambre d'extrémité (50), et une restriction (48) raccorde la chambre d'extrémité à la cavité (33), et dans laquelle un second canal (18, 19, 20, 21) raccorde le raccord de cylindre (24) à la chambre d'extrémité via une soupape de décharge (10).

5. Soupape selon l'une quelconque des revendications précédentes, dans laquelle la commande (17, 40, 43) comprend un ressort (37) pour pousser le corps de soupape (29) vers la position neutre (N).

6. Soupape selon l'une quelconque des revendications précédentes, dans laquelle la commande (17, 40, 43) comprend un plongeur (40) entraîné pneumatiquement.
